# EUROPÄISCHE PATENTSCHRIFT

(11) **EP 3 299 292 B1**
(45) Veröffentlichungstag und Bekanntmachung des Hinweises auf die Patenterteilung: **01.07.2020**
(21) Anmeldenummer: 16190270.5
(22) Anmeldetag: 23.09.2016
(51) Int. Cl.: B64C 39/02

(54) **UNBEMANNTES FLUGGERÄT**
UNMANNED AIRCRAFT
AERONEF SANS PILOTE

(43) Veröffentlichungstag der Anmeldung: 28.03.2018
(73) Patentinhaber: microdrones GmbH, 57078 Siegen (DE)
(72) Erfinder: Löwe, Falk, 33142 Büren (DE)
(74) Vertreter: Glawe, Delfs, Moll

(56) Entgegenhaltungen:
- DE-A1-102010 010 508
- DE-U1-202015 105 415
- US-A- 6 056 237
- US-A1- 2011 084 162
- US-A1- 2013 240 673

## Beschreibung

Die Erfindung betrifft ein unbemanntes Fluggerät mit einer Abwurfeinrichtung für ein erstes Ladegut und ein zweites Ladegut. Die Erfindung betrifft außerdem ein Verfahren zum Abwerfen eines ersten Ladeguts und eines zweiten Ladeguts von einem unbemannten Fluggerät.

Unbemannte Fluggeräte können verwendet werden, um Gegenstände an einen Ort zu bringen, der ansonsten nur schwer zugänglich ist. Dies ist beispielsweise von Interesse, wenn an dem Ort Menschen in Not sind. Diese können mit Hilfsgütern oder Rettungsmaterialien unterstützt werden. Möglich ist beispielsweise auch, dass an dem unzugänglichen Ort Messungen durchgeführt werden sollen und das Fluggerät verwendet wird, um die erforderlichen Sensoren zum Ort der Messung zu bringen. Durch die Abwurfeinrichtung kann das Fluggerät sich selbsttätig von seiner Ladung trennen.

Der Erfindung liegt die Aufgabe zugrunde, ein unbemanntes Fluggerät sowie ein zugehöriges Verfahren vorzustellen, die ein Abwerfen der Ladegüter unter geringem technischem Aufwand ermöglichen.

Erfindungsgemäß umfasst die Abwurfeinrichtung, wie in Anspruch 1 definiert, unter anderem ein Betätigungselement, das eine erste Bewegung vollführt um das erste Ladegut abzuwerfen, und das eine zweite Bewegung vollführt, um das zweite Ladegut abzuwerfen.

Die erste Bewegung und die zweite Bewegung des Betätigungselements folgen zeitlich nacheinander. Es gibt also einen Zustand des erfindungsgemäßen Fluggeräts, in dem das erste Ladegut bereits abgeworfen wurde, während das zweite Ladegut noch mit dem Fluggerät verbunden ist.

Die Erfindung basiert auf der Erkenntnis, dass regelmäßig nur eine begrenzte Anzahl von Kommunikationskanälen zur Verfügung steht, um Steuerbefehle in Richtung des unbemannten Fluggeräts zu übertragen. Indem zum Abwerfen der ersten Ladung und zum Abwerfen der zweiten Ladung dasselbe Betätigungselement genutzt wird, muss nur ein Element angesteuert werden. Dies trägt zu einer effektiven Nutzung der zur Verfügung stehenden Kommunikationskanäle bei.

Die erste Bewegung und die zweite Bewegung des Bewegungselements können eine übereinstimmende Bewegungsrichtung haben. Der Begriff Bewegungsrichtung umfasst lineare Bewegungen, aber auch andere Arten von Bewegungen, wie beispielsweise Drehbewegungen oder Schwenkbewegungen. Auch durch solche Bewegungen kann eine (nicht-lineare) Bewegungsbahn definiert werden, entlang derer sich ein Element in einer Bewegungsrichtung bewegen kann. Wenn beide Bewegungen dieselbe Bewegungsrichtung haben, wird die Kommunikation weiter vereinfacht, weil keine Information über die Bewegungsrichtung übertragen werden muss.

Die erfindungsgemäße Abwurfeinrichtung umfasst einen ersten Befestigungsmechanismus, der dem ersten Ladegut zugeordnet ist, und einen zweiten Befestigungsmechanismus, der dem zweiten Ladegut zugeordnet ist. In einem ersten Zustand des Befestigungsmechanismus ist das zugehörige Ladegut mit dem unbemannten Fluggerät verbunden. In einem zweiten Zustand des Befestigungsmechanismus ist das zugehörige Ladegut nicht mit dem unbemannten Fluggerät verbunden. Ist also das Fluggerät in der Luft, wenn der Befestigungsmechanismus vom ersten Zustand in den zweiten Zustand bewegt wird, so kann das zugehörige Ladegut sich von dem Fluggerät lösen und nach unten fallen. Ist das Fluggerät am Boden, wenn der Befestigungsmechanismus im zweiten Zustand ist, so kann das Fluggerät abheben, während das Ladegut am Boden bleibt. Beides wird im Rahmen der Erfindung als Abwerfen bezeichnet.

Es gibt verschiedene Möglichkeiten, wie der einzelne Befestigungsmechanismus der Abwurfeinrichtung ausgestaltet sein kann. Bevorzugt umfasst jeder der Befestigungsmechanismen eines oder mehrere der nachfolgenden Merkmale.

In einer gewichtssparenden Variante umfasst das Ladegut einen Vorsprung, der dazu ausgelegt ist, durch eine Durchgangsöffnung in einem Strukturbauteil des unbemannten Fluggeräts hindurch geführt zu werden. Der Vorsprung kann nach oben ausgerichtet sein, wenn das Fluggerät in seiner normalen Ausrichtung ist. Dies hat den Vorteil, dass sich der Vorsprung unter dem Einfluss der Schwerkraft aus der Durchgangsöffnung herauslösen kann, wenn der Befestigungsmechanismus im zweiten Zustand ist.

Der Vorsprung und die Durchgangsöffnung können so aneinander angepasst sein, dass eine Drehbewegung des Ladeguts um eine Achse der Durchgangsöffnung ausgeschlossen ist. Es ist dann kein weiteres Element erforderlich, um unerwünschte Drehbewegungen zwischen dem Ladegut und dem Strukturbauteil des unbemannten Fluggeräts zu unterbinden. Beispielsweise kann die Durchgangsöffnung als Schlitz ausgebildet sein und der Vorsprung eine dazu passende Form haben.

Erfindungsgemäß weist die Abwurfeinrichtung zwei Verriegelungselemente auf, wobei jeweils ein Verriegelungselement mit dem Vorsprung des jeweiligen Ladeguts in Eingriff steht, wenn der Befestigungsmechanismus im ersten Zustand ist. Der Eingriff kann in einem Abschnitt des Vorsprungs erfolgen, der in die Durchgangsöffnung des Strukturbauteils eingeführt ist, insbesondere in einem Abschnitt des Vorsprungs, der auf der anderen Seite des Strukturbauteils herausragt. Insbesondere kann der Vorsprung eine Bohrung aufweisen, durch die das Verriegelungselement hindurchgeführt ist. Um den Befestigungsmechanismus vom ersten Zustand in den zweiten Zustand zu bringen, wird der Eingriff zwischen dem Verriegelungselement und dem Vorsprung gelöst, sodass der Vorsprung aus der Durchgangsöffnung herausgezogen werden kann.

In dem Zustand, in dem beide Ladegüter mit dem Strukturbauteil des Fluggeräts verbunden sind, kann der Eingriff des zweiten Verriegelungselements mit dem zweiten Ladegut stärker ausgeprägt sein als der Eingriff des ersten Verriegelungselements mit dem ersten Ladegut. Dadurch wird es möglich, die beiden Verriegelungselemente einer gleichartigen Bewegung zu unterziehen, wodurch nur eines der Ladegüter abgeworfen wird, während das andere weiterhin mit dem Fluggerät verbunden bleibt. Sind die Verriegelungselemente durch Bohrungen in den Ladegütern hindurchgeführt, so kann das zweite Verriegelungselement tiefer in die Bohrung des zweiten Ladeguts eingeführt sein, als das erste Verriegelungselement in die Bohrung des ersten Ladeguts eingeführt ist.

Das Betätigungselement ist erfindungsgemäß so mit jedem Verriegelungselement gekoppelt, dass eine Bewegung des Betätigungselements in eine Bewegung des Verriegelungselements übertragen wird. Der Befestigungsmechanismus kann dann durch eine Bewegung des Betätigungselements vom ersten Zustand in den zweiten Zustand gebracht werden.

Das erfindungsgemäße Betätigungselement kann an einen Antriebsmotor angeschlossen sein, durch den das Betätigungselement in Drehung versetzt wird. Das jeweilige Verriegelungselement kann an einen von der Drehachse des Antriebsmotors entfernten Punkt des Betätigungselements angeschlossen sein, so dass dieser Abschnitt des Verriegelungselements sich bei einer Drehung des Antriebsmotors entlang einer Kreisbahn bewegt. Wird das Ladegut durch eine lineare Bewegung des Verriegelungselements von dem Strukturbauteil gelöst, so ist eine Umsetzung der Bewegung entlang einer Kreisbahn in eine lineare Bewegung erforderlich. Diese Umsetzung kann beispielsweise dadurch erfolgen, dass das Verriegelungselement in sich flexibel ist und ein zu dem Ladegut benachbarter Abschnitt entlang einer Führungsfläche linear geführt wird.

Die Abwurfeinrichtung umfasst erfindungsgemäß ein erstes Verriegelungselement, das sich von dem Betätigungselement zu dem ersten Befestigungsmechanismus erstreckt, und ein zweites Verriegelungselement, das sich von dem Betätigungselement zu dem zweiten Befestigungselement erstreckt. Die Verriegelungselemente können an unterschiedlichen Anlenkpunkten des Betätigungselements angelenkt sein. Bezogen auf die Drehachse des Antriebsmotors kann die Winkeldifferenz zwischen den Anlenkpunkten mindestens 90°, vorzugsweise mindestens 120°, weiter vorzugsweise mindestens 150° sein. In einer bevorzugten Ausführungsform sind die Anlenkpunkte um 180° versetzt, was gleichbedeutend damit ist, dass die Position der Anlenkpunkte durch eine Drehung des Antriebsmotors um 180° vertauscht werden kann.

Der Abwurfeinrichtung kann so gestaltet sein, dass das Betätigungselement in einer ersten Position ist, wenn beide Befestigungsmechanismus geschlossen sind, also bei der Ladegüter mit dem Fluggerät verbunden sind. Das Betätigungselement kann in eine zweite Position gebracht werden, um den ersten Befestigungsmechanismus zu öffnen, während der zweite Befestigungsmechanismus geschlossen bleibt. Ausgehend von der zweiten Position kann das Betätigungselement in eine dritte Position gebracht werden, in der auch der zweite Befestigungsmechanismus geöffnet ist.

Ist das Betätigungselement an den Antriebsmotor angeschlossen, so kann der Antriebsmotor für die Bewegung von der ersten Position in die zweite Position um einen ersten Drehwinkel gedreht werden. Für die Bewegung von der zweiten Position in die dritte Position kann der Antriebsmotor um einen zweiten Drehwinkel gedreht werden. Der erste Drehwinkel und der zweite Drehwinkel können beispielsweise zwischen 10° und 45° liegen. Der erste Drehwinkel und der zweite Drehwinkel können gleich groß sein. Im Sinne der Erfindung haben die beiden Bewegungen die gleiche Bewegungsrichtung, wenn der Antriebsmotor sich zweimal in die gleiche Richtung dreht.

Die erfindungsgemäße Abwurfeinrichtung kann eine Empfangseinheit umfassen, um Steuersignale zu empfangen. Die Übertragung der Steuersignale zu der Empfangseinheit kann beispielsweise per Funk erfolgen. Das Steuersignal zum Auslösen der ersten Bewegung des Betätigungselements kann identisch sein mit dem Steuersignal zum Auslösen der zweiten Bewegung des Betätigungselements.

Für eine gleichmäßige Lastverteilung können die beiden Ladegüter so angeordnet sein, dass sie eine senkrechte Ebene, die sich durch den Schwerpunkt des Fluggeräts erstreckt zwischen sich einschließen. Das Betätigungselement kann zwischen den Ladegütern angeordnet sein. Das Betätigungselement kann von der senkrechten Ebene geschnitten werden, die sich durch den Schwerpunkt des Fluggeräts erstreckt.

Ein Ladegut im Sinne der Erfindung kann mehrere Einzelgegenstände erfassen. Es ist möglich, das erfindungsgemäße Fluggerät so zu gestalten, dass mehr als zwei Ladegüter abgeworfen werden können. Beispielweise kann mit einer dritten Bewegung des Betätigungselements ein drittes Ladegut abgeworfen werden, mit einer vierten Bewegung des Betätigungselements ein viertes Ladegut usw. Vorzugsweise haben alle Bewegungen des Betätigungselements eine übereinstimmende Bewegungsrichtung.

Die Erfindung betrifft außerdem ein Verfahren gemäß Anspruch 13, zum Abwerfen eines ersten Ladeguts und eines zweiten Ladeguts von einem unbemannten Fluggerät. Bei dem Verfahren wird ein Betätigungselement in Bewegung versetzt, um das erste Ladegut abzuwerfen. Zu einem späteren Zeitpunkt wird dasselbe Betätigungselement erneut in Bewegung versetzt, um das zweite Ladegut abzuwerfen. Das Verfahren kann mit weiteren Merkmalen fortgebildet werden, die im Zusammenhang des erfindungsgemäßen Fluggeräts beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: ein unbemanntes Fluggerät gemäß der Erfindung;
- Fig. 2:: eine Ansicht von oben auf eine erfindungsgemäße Abwurfeinrichtung;
- Fig. 3:: die Abwurfeinrichtung gemäß Fig. 2 in einer Seitenansicht in teilweise geschnittener Darstellung;
- Fig. 4:: die Ansicht gemäß Fig. 3 in einem anderen Zustand des Abwurfeinrichtung; und
- Fig. 5:: die Ansicht gemäß Fig. 4 in einem anderen Zustand der Abwurfeinrichtung.

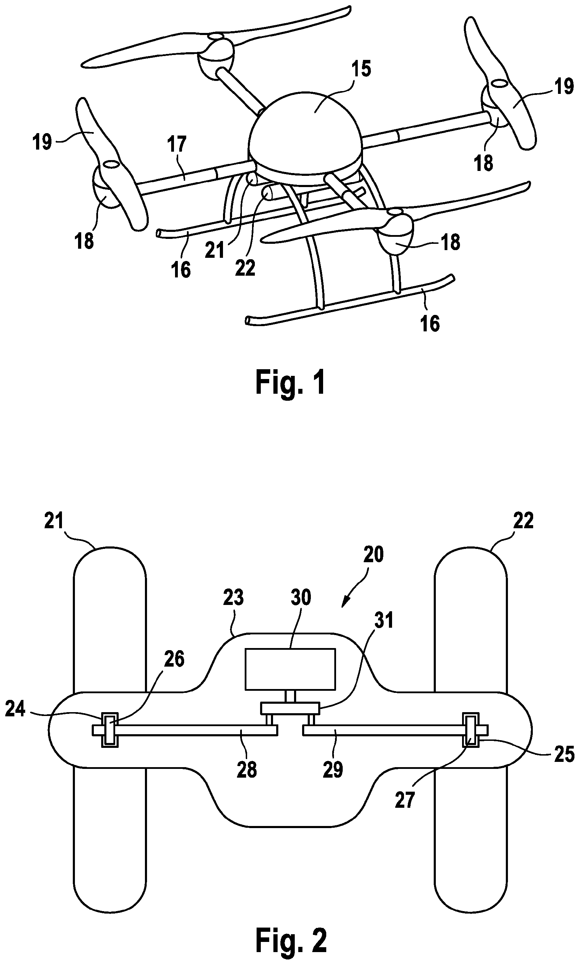

Ein in Fig. 1 gezeigtes unbemanntes Fluggerät umfasst einen Rumpfkörper 15 mit Kufen 16, auf denen das Fluggerät steht, wenn es am Boden ist. Von dem Rumpfkörper 15 erstrecken sich vier Tragstreben 17 nach außen. Am äußeren Ende jeder Tragstrebe 17 ist ein Antriebsmotor 18 zum Antrieb eines Rotors 19 angeordnet. Zum Start werden die Rotoren 19 in gegenläufige Drehung versetzt, sodass das Fluggerät senkrecht nach oben abhebt. Durch geeignete Ansteuerung der Antriebsmotoren 18 kann das Fluggerät gezielt entlang gewünschter Flugbahnen gesteuert werden.

An der Unterseite des Rumpfkörpers 15 sind zwei Rettungseinheiten 21, 22 aufgehängt, die sich selbsttätig aufblasen, wenn sie mit Wasser in Berührung kommen. Die Rettungseinheiten 21, 22 sind für in Seenot geratene Personen bestimmt. Das unbemannte Fluggerät kann zu der in Seenot befindlichen Person fliegen und dort aus geringer Flughöhe die erste Rettungseinheit 21 abwerfen. Anschließend kann das unbemannte Fluggerät zu einem weiteren Ort fliegen, an dem eine andere Person sich in Seenot befindet, um dort die zweite Rettungseinheit 22 abzuwerfen. Im Inneren des Rumpfkörpers 15 ist eine in Fig. 1 nicht sichtbare Abwurfeinrichtung 20 untergebracht, mit der die Rettungseinheiten 21, 22 unabhängig voneinander und zeitlich nacheinander abgeworfen werden können. Die Rettungseinheiten bilden Ladegüter 21, 22 im Sinne der Erfindung.

Die Abwurfeinrichtung 20 umfasst gemäß Fig. 2 ein Strukturbauteil 23, das fest mit dem unbemannten Fluggerät verbunden ist. In dem Strukturbauteil 23 sind zwei rechteckige Durchgangsöffnungen 24, 25 ausgebildet. In die erste Durchgangsöffnung 24 ist ein am oberen Ende der ersten Rettungseinheit 21 angeordneter Vorsprung 26 eingeführt. Der Vorsprung 26 hat einen zu der Durchgangsöffnung 24 passenden rechteckigen Querschnitt, sodass der Vorsprung 26 nicht innerhalb der Öffnung 24 verdreht werden kann.

Der Vorsprung 26 ist mit einer Bohrung versehen, die oberhalb des Strukturbauteils 23 angeordnet ist. Durch ein Verriegelungselement 28, das durch die Bohrung hindurchgesteckt ist, ist der Vorsprung 26 in dieser Position fixiert. Die Rettungseinheit 21 kann nicht von dem Strukturbauteil 23 gelöst werden, solange der Vorsprung 26 durch das Verriegelungselement 28 blockiert ist.

Auf entsprechende Weise ist die zweite Rettungseinheit 22 mit dem Strukturbauteil 23 verbunden. Ein Vorsprung 27 der Rettungseinheit 22 ist durch eine Durchgangsöffnung 25 im Strukturbauteil 23 hindurch geführt, sodass eine Bohrung des Vorsprungs 27 oberhalb des Strukturbauteils 23 angeordnet ist. Ein zweites Verriegelungselement 29 ist durch die Bohrung des Vorsprungs 27 hindurchgesteckt. Das Ende des Verriegelungselements 29 ragt weiter aus der Bohrung des Vorsprungs 27 heraus, als das Ende des Verriegelungselements 28 aus der Bohrung des Vorsprungs 26 herausragt.

Die äußeren Enden der Verriegelungselemente 28, 29 sind entlang der Oberfläche des Strukturbauteils 23 geführt, sodass die Verriegelungselemente 28, 29 sich im Wesentlichen geradlinig durch die Bohrungen der Vorsprünge 26, 27 hindurch erstrecken. Die beiden inneren Enden der Verriegelungselemente 28, 29 sind mit einem Betätigungselement 31 verbunden, das an die Motorwelle eines Antriebsmotors 30 angeschlossen ist. Der Antriebsmotor 30 umfasst eine Empfangseinheit 32 zum Empfangen von Steuerbefehlen.

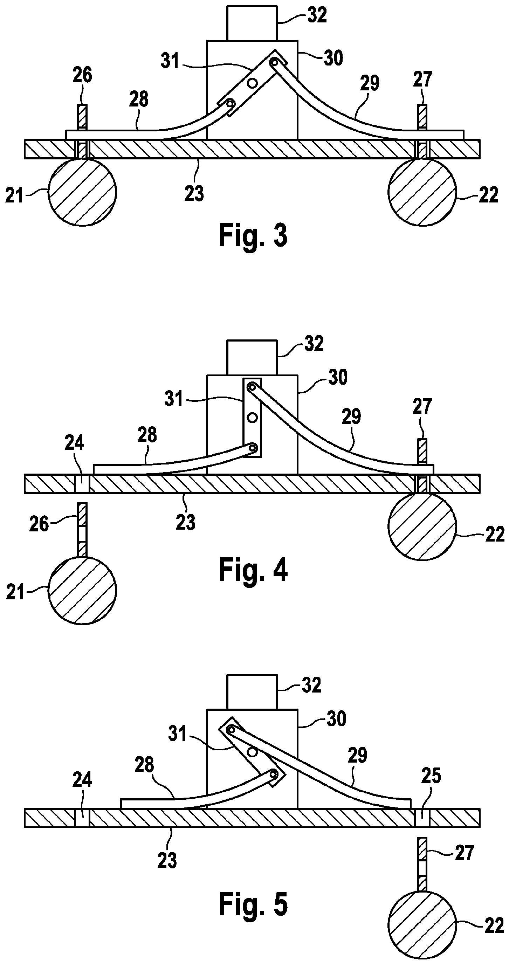

In Fig. 3 ist der Zustand der Abwurfeinrichtung 20 dargestellt, in dem beide Rettungseinheiten 21, 22 mit dem Strukturbauteil 23 verbunden sind. Nach dem Empfang eines Steuerbefehls zum Abwurf einer Rettungseinheit 21 dreht der Antriebsmotor 30 seine Motorwelle um etwa 45°, wodurch das Betätigungselement 31 in Fig. 3 entgegen dem Uhrzeigersinn gedreht wird, sodass die Abwurfeinrichtung 20 in den Zustand gemäß Fig. 4 übergeht. Das Befestigungselement 28 ist aus dem Vorsprung 26 der Rettungseinheit 21 herausgezogen. Die Rettungseinheit 21 wird dadurch von dem Strukturbauteil 23 gelöst und fällt unter dem Einfluss der Schwerkraft nach unten. Das zweite Verriegelungselement 29 wird lediglich ein Stück zurückgezogen, sodass das Verriegelungselement 29 sich weiterhin durch die Bohrung in dem Vorsprung 27 der zweiten Rettungseinheit 22 erstreckt. Die zweite Rettungseinheit 22 bleibt also mit dem Strukturbauteil 23 verbunden.

Zu einem späteren Zeitpunkt empfängt die Empfangseinheit 32 erneut einen Steuerbefehl, gemäß dem der Antriebsmotor 30 seine Motorwelle ausgehend von dem in Fig. 4 gezeigten Zustand um 45° dreht. Das Betätigungselement 31 geht in den Zustand gemäß Fig. 5 über. Das zweite Verriegelungselement 29 wird aus der Bohrung des Vorsprung 27 der zweiten Rettungseinheit 22 herausgezogen, sodass sich auch die zweite Rettungseinheit 22 nach unten von dem Strukturbauteil 23 lösen kann.

Bei den beiden Verriegelungselementen 28, 29 handelt es sich um flexible Kunststoffstreifen, die nach oben und unten elastisch biegbar sind. Die vertikale Bewegung, die mit dem Verdrehen des Betätigungselement 31 verbunden ist, kann dadurch elastisch von den Verriegelungselement dann 28, 29 aufgenommen werden.

Beim Übergang von dem in Fig. 3 gezeigten Zustand zu dem in Fig. 4 gezeigten Zustand und beim Übergang von dem in Fig. 4 gezeigten Zustand zu dem in Fig. 5 gezeigten Zustand dreht der Antriebsmotor 30 sich zweimal in dieselbe Drehrichtung und um denselben Drehwinkel. Der Antriebsmotor kann folglich zweimal mit einem identischen Steuersignal angesprochen werden, sodass für das Abwerfen der Rettungseinheiten 21, 22 nur in sehr geringem Umfang Kommunikationskanäle belegt werden.

## Patentansprüche

1. Unbemanntes Fluggerät mit einer Abwurfeinrichtung (20), wobei die Abwurfeinrichtung (20) einen ersten Befestigungsmechanismus für ein erstes Ladegut (21) und einen zweiten Befestigungsmechanismus für ein zweites Ladegut (22) umfasst, wobei die Abwurfeinrichtung (20) ein Betätigungselement (31) umfasst, das eine erste Bewegung vollführt, um das erste Ladegut (21) abzuwerfen, und das eine zweite Bewegung vollführt, um das zweite Ladegut (22) abzuwerfen, **dadurch gekennzeichnet, dass** die Abwurfeinrichtung ein erstes Verriegelungselement (28) aufweist, das sich von dem Betätigungselement (31) zu dem ersten Befestigungsmechanismus erstreckt, und ein zweites Verriegelungselement (29) aufweist, das sich von dem Betätigungselement (31) zu dem zweiten Befestigungsmechanismus erstreckt, wobei das Betätigungselement (31) so mit den Verriegelungselementen (28, 29) gekoppelt ist, dass eine Bewegung des Betätigungselements (31) in eine Bewegung der Verriegelungselemente (28, 29) übertragen wird.

2. Fluggerät nach Anspruch 1, **dadurch gekennzeichnet, dass** das Fluggerät ein erstes Ladegut (21) und ein zweites Ladegut (22) umfasst.

3. Fluggerät nach Anspruch 1 oder 2, **dadurch gekennzeichnet, dass** die erste Bewegung und die zweite Bewegung des Betätigungselements (31) eine übereinstimmende Bewegungsrichtung haben.

4. Fluggerät nach Anspruch 2 oder 3, **dadurch gekennzeichnet, dass** das erste und das zweite Ladegut (21, 22) einen Vorsprung (26, 27) umfasst, der dazu ausgelegt ist, durch eine Durchgangsöffnung (24, 25) in einem Strukturbauteil (29) des Fluggeräts hindurch geführt zu werden.

5. Fluggerät nach Anspruch 4, **dadurch gekennzeichnet, dass** der Vorsprung (26, 27) nach oben ausgerichtet ist.

6. Fluggerät nach Anspruch 4 oder 5, **dadurch gekennzeichnet, dass** der Vorsprung (26, 27) und die Durchgangsöffnung (24, 25) so aneinander angepasst sind, dass eine Drehbewegung des ersten und des zweiten Ladeguts (21, 22) um eine Achse der Durchgangsöffnung (24, 25) ausgeschlossen ist.

7. Fluggerät nach einem der Ansprüche 1 bis 6, **dadurch gekennzeichnet, dass** das erste und das zweite Verriegelungselement (28, 29) im verbundenen Zustand jeweils mit dem ersten und dem zweiten Ladegut (21, 22) in Eingriff steht.

8. Fluggerät nach Anspruch 7, **dadurch gekennzeichnet, dass** das erste und das zweite Verriegelungselement (28, 29) jeweils in eine Bohrung des ersten und des zweiten Ladeguts (21, 22) eingreift.

9. Fluggerät nach Anspruch 8, **dadurch gekennzeichnet, dass** das zweite Verriegelungselement (29) tiefer in die Bohrung des zweiten Ladeguts (22) eingeführt ist als das erste Verriegelungselement (28) in die Bohrung des ersten Ladeguts (21) eingeführt ist.

10. Fluggerät nach einem der Ansprüche 1 bis 9, **dadurch gekennzeichnet, dass** das Betätigungselement (31) an einen Antriebsmotor (30) angeschlossen ist, der dazu ausgelegt ist, das Betätigungselement (31) in Drehung zu versetzen.

11. Fluggerät nach Anspruch 10, **dadurch gekennzeichnet, dass** der Antriebsmotor (30) für die erste Bewegung und die zweite Bewegung des Betätigungselements (31) in dieselbe Richtung gedreht wird.

12. Fluggerät nach Anspruch 10 oder 11, **dadurch gekennzeichnet, dass** der Antriebsmotor (30) für die erste Bewegung und die zweite Bewegung des Betätigungselements (31) um denselben Drehwinkel gedreht wird.

13. Verfahren zum Abwerfen eines ersten Ladeguts (21) und eines zweiten Ladeguts (22) von einem unbemannten Fluggerät, bei dem ein erstes Verriegelungselement (28) sich von einem Betätigungselement (31) zu einem Befestigungsmechanismus des ersten Ladeguts (21) erstreckt und bei dem ein zweites Verriegelungselement (29) sich von dem Betätigungselement zu einem Befestigungsmechanismus des zweiten Ladeguts erstreckt, wobei das Betätigungselement (31) in Bewegung versetzt wird, um das erste Ladegut (21) abzuwerfen und bei dem zu einem späteren Zeitpunkt dasselbe Betätigungselement (31) in Bewegung versetzt wird, um das zweite Ladegut (22) abzuwerfen, wobei das Betätigungselement (31) so mit den Verriegelungselementen (28, 29) gekoppelt ist, dass eine Bewegung des Betätigungselements (31) in eine Bewegung der Verriegelungselemente (28, 29) übertragen wird.

## Claims

1. Unmanned aerial vehicle having a dropping device (20), wherein the dropping device (20) comprises a first fastening mechanism for a first load (21) and a second fastening mechanism for a second load (22), wherein the dropping device (20) comprises an actuating element (31) that carries out a first movement in order to drop the first load (21) and that carries out a second movement in order to drop the second load (22), **characterized in that** the dropping device has a first locking element (28) that extends from the actuating element (31) to the first fastening mechanism, and has a second locking element (29) that extends from the actuating element (31) to the second fastening mechanism, wherein the actuating element (31) is coupled to the locking elements (28, 29) such that a movement of the actuating element (31) is converted into a movement of the locking elements (28, 29).

2. Aerial vehicle according to Claim 1, **characterized in that** the aerial vehicle comprises a first load (21) and a second load (22).

3. Aerial vehicle according to Claim 1 or 2, **characterized in that** the first movement and the second movement of the actuating element (31) have a corresponding direction of movement.

4. Aerial vehicle according to Claim 2 or 3, **characterized in that** the first and the second load (21, 22) comprise a protrusion (26, 27), which is designed to be guided through a passage opening (24, 25) in a structural component (29) of the aerial vehicle.

5. Aerial vehicle according to Claim 4, **characterized in that** the protrusion (26, 27) is oriented upwardly.

6. Aerial vehicle according to Claim 4 or 5, **characterized in that** the protrusion (26, 27) and the passage opening (24, 25) are coordinated with one another such that a rotational movement of the first and of the second load (21, 22) about an axis of the passage opening (24, 25) is precluded.

7. Aerial vehicle according to one of Claims 1 to 6, **characterized in that** the first and the second locking element (28, 29) are engaged respectively with the first and the second load (21, 22) in the connected state.

8. Aerial vehicle according to Claim 7, **characterized in that** the first and the second locking element (28, 29) engage respectively in a bore in the first and in the second load (21, 22).

9. Aerial vehicle according to Claim 8, **characterized in that** the second locking element (29) is introduced more deeply into the bore in the second load (22) than the first locking element (28) is introduced into the bore in the first load (21).

10. Aerial vehicle according to one of Claims 1 to 9, **characterized in that** the actuating element (31) is connected to a drive motor (30), which is designed to set the actuating element (31) in rotation.

11. Aerial vehicle according to Claim 10, **characterized in that** the drive motor (30) is rotated in the same direction for the first movement and the second movement of the actuating element (31).

12. Aerial vehicle according to Claim 10 or 11, **characterized in that** the drive motor (30) is rotated through the same angle of rotation for the first movement and the second movement of the actuating element (31).

13. Method for dropping a first load (21) and a second load (22) from an unmanned aerial vehicle, in which a first locking element (28) extends from an actuating element (31) to a fastening mechanism of the first load (21) and in which a second locking element (29) extends from the actuating element to a fastening mechanism of the second load, wherein the actuating element (31) is set in motion in order to drop the first load (21), and in which, at a later time, the same actuating element (31) is set in motion in order to drop the second load (22), wherein the actuating element (31) is coupled to the locking elements (28, 29) such that a movement of the actuating element (31) is converted into a movement of the locking elements (28, 29).

## Revendications

1. Aéronef sans pilote comprenant un dispositif de largage (20), dans lequel le dispositif de largage (20) comporte un premier mécanisme de fixation pour une première charge (21) et un deuxième mécanisme de fixation pour une deuxième charge (22), dans lequel le dispositif de largage (20) comporte un élément d'actionnement (31) qui effectue un premier mouvement pour larguer la première charge (21), et qui effectue un deuxième mouvement pour larguer la deuxième charge (22), **caractérisé en ce que** le dispositif de largage comprend un premier élément de verrouillage (28) qui s'étend de l'élément d'actionnement (31) au premier mécanisme de fixation, et un deuxième élément de verrouillage (29) qui s'étend de l'élément d'actionnement (31) au deuxième mécanisme de fixation, l'élément d'actionnement (31) étant accouplé aux éléments de verrouillage (28, 29) de telle sorte qu'un mouvement de l'élément d'actionnement (31) soit transformé en un mouvement des éléments de verrouillage (28, 29).

2. Aéronef selon la revendication 1, **caractérisé en ce que** l'aéronef comporte une première charge (21) et une deuxième charge (22).

3. Aéronef selon la revendication 1 ou 2, **caractérisé en ce que** le premier mouvement et le deuxième mouvement de l'élément d'actionnement (31) ont un sens de mouvement coïncident.

4. Aéronef selon la revendication 2 ou 3, **caractérisé en ce que** la première et la deuxième charge (21, 22) comportent une saillie (26, 27) qui est conçue pour être guidée à travers une ouverture de passage (24, 25) dans un composant structural (29) de l'aéronef.

5. Aéronef selon la revendication 4, **caractérisé en ce que** la saillie (26, 27) est orientée vers le haut.

6. Aéronef selon la revendication 4 ou 5, **caractérisé en ce que** la saillie (26, 27) et l'ouverture de passage (24, 25) sont adaptées l'une à l'autre de telle sorte qu'un mouvement rotatif de la première et de la deuxième charge (21, 22) autour d'un axe de l'ouverture de passage (24, 25) soit empêché.

7. Aéronef selon l'une des revendications 1 à 6, **caractérisé en ce que** le premier et le deuxième élément de verrouillage (28, 29) sont, dans l'état relié, en prise respectivement avec la première et la deuxième charge (21, 22).

8. Aéronef selon la revendication 7, **caractérisé en ce que** le premier et le deuxième élément de verrouillage (28, 29) viennent en prise respectivement dans un alésage de la première et de la deuxième charge (21, 22).

9. Aéronef selon la revendication 8, **caractérisé en ce que** le deuxième élément de verrouillage (29) est introduit plus profondément dans l'alésage de la deuxième charge (22) que le premier élément de verrouillage (28) ne l'est dans l'alésage de la première charge (21).

10. Aéronef selon l'une des revendications 1 à 9, **caractérisé en ce que** l'élément d'actionnement (31) est raccordé à un moteur d'entraînement (30) qui est conçu pour mettre en rotation l'élément d'actionnement (31).

11. Aéronef selon la revendication 10, **caractérisé en ce que** le moteur d'entraînement (30) est entraîné en rotation dans le même sens pour le premier mouvement et le deuxième mouvement de l'élément d'actionnement (31).

12. Aéronef selon la revendication 10 ou 11, **caractérisé en ce que** le moteur d'entraînement (30) est entraîné en rotation d'un même angle de rotation pour le premier mouvement et le deuxième mouvement de l'élément d'actionnement (31).

13. Procédé de largage d'une première charge (21) et d'une deuxième charge (22) à partir d'un aéronef sans pilote, selon lequel un premier élément de verrouillage (28) s'étend d'un élément d'actionnement (31) à un mécanisme de fixation de la première charge (21) et selon lequel un deuxième élément de verrouillage (29) s'étend de l'élément d'actionnement à un mécanisme de fixation de la deuxième charge, dans lequel l'élément d'actionnement (31) est mis en mouvement pour larguer la première charge (21) et selon lequel, à un instant ultérieur, le même élément d'actionnement (31) est mis en mouvement pour larguer la deuxième charge (22), dans lequel l'élément d'actionnement (31) est accouplé aux éléments de verrouillage (28, 29) de telle sorte qu'un mouvement de l'élément d'actionnement (31) soit transformé en un mouvement des éléments de verrouillage (28, 29).
